# EUROPÄISCHE PATENTSCHRIFT

(11) **EP 2 626 576 B1**
(45) Veröffentlichungstag und Bekanntmachung des Hinweises auf die Patenterteilung: **30.12.2015**
(21) Anmeldenummer: 12000806.5
(22) Anmeldetag: 08.02.2012
(51) Int. Cl.: F16B 37/14, B41J 29/02

(54) **Passstift für eine Druckvorrichtung sowie damit ausgerüstete Druckvorrichtung**
Pin for a pressure device and pressure device fitted with same
Goupille pour un dispositif d'impression ainsi que dispositif d'impression en étant équipé

(43) Veröffentlichungstag der Anmeldung: 14.08.2013
(73) Patentinhaber: Franck, Jan, 95448 Bayreuth (DE)
(72) Erfinder: Franck, Jan, 95448 Bayreuth (DE)
(74) Vertreter: Küchler, Stefan

(56) Entgegenhaltungen:
- US-A- 5 454 676
- US-A- 6 012 763
- US-A1- 2002 127 082
- US-A1- 2008 080 947
- US-A1- 2009 304 477
- US-A1- 2011 076 113
- US-A1- 2011 221 822

## Beschreibung

Die Erfindung richtet sich auf einen Passstift zur gegenseitigen Ausrichtung zweier zu verbindender, gelochter Teile, vorzugsweise Teile einer Druckvorrichtung, insbesondere eines Portaldruckers, mit einem zylindrischen Schaftbereich von konstantem Schaftdurchmesser aus einem harten Material, insbesondere aus gehärtetem Stahl, sowie auf eine Druckvorrichtung, insbesondere einen Portaldrucker, mit wenigstens einem entlang einer Führungseinrichtung verfahrbaren Schlitten und mit wenigstens einem Druckkopf, wobei ein plattenförmiger Bereich des Druckkopfs sowie eine vorzugsweise plattenförmige Befestigungseinrichtung an dem Schlitten wenigstens je eine miteinander fluchtende Bohrung aufweisen, worin ein Passstift hineingesteckt ist mit einem zylindrischen Schaftbereich von konstantem Schaftdurchmesser aus einem harten Material, insbesondere aus gehärtetem Stahl.

Die unaufhaltsam voranschreitende Entwicklung der Technik ist in immer stärkerem Maße mit steigenden Forderungen nach immer höherer Präzision verbunden. Ein Beispiel herfür sind Druckvorrichtungen. Trotz zunehmender Größe der zu bedruckenden Flächen soll die mit einer Druckvorrichtung erzielbare Schärfe des Druckergebnisses keinesfalls geringer werden, bei gleichzeitig möglichst gesteigerter Druckgeschwindigkeit. Dies ist nur erreichbar, wenn mehrere Druckköpfe an einem gemeinsamen Schlitten angeordnet und in höchstem Maße präzise zueinander ausgerichtet werden, so dass mit einer Fahrt des Schlittens gleich ein breiter Streifen gedruckt werden kann. Eine einmalige, präzise Relativausrichtung mehrerer Druckköpfe erfordert daher eine oftmalig zu wiederholdende Sequenz aus Justage und Probelauf und hat sich demzufolge in der Praxis als äußerst zeitraubend erwiesen. Hinzu kommt, dass bei den vergleichsweise kleinen Druckköpfen neben den Bohrungen für die Befestigungsschrauben überhaupt kein weiterer Platz für zusätzliche Zentrierungselemente gleich welcher Art vorhanden ist, so dass eine automatische Zentrierung bzw. Justierung nicht möglich ist. Aus den Nachteilen des beschriebenen Standes der Technik resultiert das die Erfindung initiierende Problem, für eine gattungsgemäße Druckvorrichtung ein geeignetes Zentrierungsmittel zu entwickeln und derart zu gestalten, dass trotz eines minimalen Platzangebotes im Bereich der Druckköpfe eine möglichst einfache Justierung derselben möglich ist.

US-A-6012763 offenbart die Einleitung van Anspruch 1. Die Lösung dieses Problems gelingt durch einen Passstift zur gegenseitigen Ausrichtung zweier zu verbindender, gelochter Teile, vorzugsweise einer Druckvorrichtung, insbesondere eines Portaldruckers, mit einem zylindrischen Schaftbereich von konstantem Schaftdurchmesser aus einem harten Material, insbesondere aus gehärtetem Stahl, umfassend ein Kopfende mit einem gegenüber dem Schaftdurchmesser vergrößerten Durchmesser, sowie einen Gewindebereich mit einem gegenüber dem Schaftdurchmesser verringerten Durchmesser.

Der Passstift als solches ist dank seines harten Materials in der Lage, selbsttätig, d.h., ohne langwierige Messungen und Einstellungen, eine sozusagen "automatisierte" Justierung zwischen zwei gegeneinander auszurichtenden Teilen zu bewirken, einfach dadurch, dass zwei mit einer entsprechenden Genauigkeit eingebrachte Bohrungen in den zu verbindenden Teilen vorgesehen werden, welche den Passstift nach Art einer Passung umgreifen, bspw. nach Art einer Übergangspassung. Die Ausrüstung des Passstiftes mit einem Gewinde ermöglicht diesem eine Zusatzfunktion, nämlich die der Festlegung der beiden Teile aneinander, insbesondere unter Zuhilfenahme eines weiteren Gewindeelements, welches auf oder in das betreffende Gewinde geschraubt wird und eines der beiden zu verbindenden Teile übergreift. Das andere Teil wird von dem querchnittlich erweiterten Kopfende des Passstiftes selbst übergriffen. Zwischen diesen beiden Elementen kann durch Festziehen der Gewindeverbindung eine Presskraft erzeugt und somit auf die zu verbindenen Teile ausgeübt werden, um diese nicht nur formschlüssig, sondern zusätzlich auch noch reibschlüssig aneinander festzulegen. Aufgrund der Doppelfunktion des erfindungsgemäßen Passstiftes ist dazu keine weitere Schraubverbindung od. dgl. mehr erforderlich, und daher ist bspw. auch das begrenzte Platzangebot im Rahmen eines Druckkopfs ausreichend für die Verbindung und gleichzeitig eine automatische Justierung der betreffenden Teile.

Weitere Vorteile ergeben sich dadurch, dass das Kopfende des Passstiftes eine Einsenkung aufweist. Eine solche Einsenkung kann zum Eingriff eines Drehwerkzeuges verwendet werden, womit der Passstift während der Montage in einer definierten Drehposition gehalten werden kann oder gar aktiv gedreht werden kann, um die Schraubverbindung festzuziehen.

Als besonders geeignet hierfür hat sich eine Weiterbildung der Erfindung erwiesen, wobei die Einsenkung in dem Kopfende einen Innensechskant oder einen Innenmehrkant aufweist. Obzwar auch andere Querschnittsgeometrien denkbar sind, bietet doch ein solcher Innensechskant optimale Voraussetzungen zum Einleiten eines Drehmoments in den Passstift, unter Zuhilfenahme eines Werkzeugs mit einem zu dem Innensechskant oder Innenmehrkant komplementären Eingriffsbereich, insbesondere in Form eines Imbusschlüssels.

Die Erfindung zeichnet sich weiterhin dadurch aus, dass der Schaft eine zu seiner Längsachse koaxiale Bohrung aufweist. Es bietet sich an, diese Bohrung in Verlängerung der Einsenkung vorzusehen. Es hat sich gezeigt, dass eine derartige Bohrung von begrenztem Durchmesser die Strukturstabilität des Passstiftes nicht in kritischem Umfang herabsetzt, insbesondere wenn der Innendurchmesser d der Bohrung deutlich kleiner ist als der Außendurchmesser D im Schaftbereich, also wenn bspw. D - d > 3 mm, oder wenn D - d > 2 mm, oder wenn D - d > 1,5 mm.

Es hat sich als günstig erwiesen, dass die Bohrung den Passstift zwischen dessen beiden Stirnenden durchgehend durchsetzt. Eine solche Gestalt bringt insofern Vorteile mit sich, da sich bspw. Bohrspäne, aber auch Schmutzpartikel, etc. in einer durchgehenden Bohrung weitaus schlechter festsetzen können als in einer Sacklochbohrung.

Die Erfindung läßt sich dahingehend weiterbilden, dass der Gewindebereich als Innengewinde ausgebildet und innerhalb der Bohrung angeordnet ist. Solchenfalls erhält ein erfindungsgemäßer Passstift eine Struktur vergleichbar mit der einer Mutter, und kann wie jene zur Verankerung einer Schraube dienen, welche in diesem Falle bevorzugt von dem Schaftende her einzuschrauben ist.

Bei dieser Ausführungsform sollte der Schaft des Passstiftes gleich lang oder kürzer sein als die gemeinsame Dicke der flächig aneinander liegenden, zu verbindenden Teile im Bereich der miteinander fluchtenden Bohrungen, also ggf. im Bereich einer dortigen Vertiefung. Die Unterseite des Kopfes einer in das Schaftende eingeschraubten Schraube kann dann nicht mit dem Schaftende des Passstiftes in Kontakt treten, sondern liegt ausschließlich an dem umgebenden Oberflächenbereich des zu verbindenden und übergriffenen Teils an. Falls nur in dem vom Kopfende des Passstiftes übergriffenen Teil eine Einsenkung vorhanden ist, welche noch dazu gleich tief oder tiefer ist als die Längserstreckung des Kopfendes des Passtiftes in Richtung der Stiftachse, so ist diese Bemessungsregel gleichbedeutend damit, dass der gesamte Passstift nicht länger sein sollte als die gemeinsame Dicke der flächig aneinander liegenden, zu verbindenden Teile.

Im Rahmen einer anderen Ausführungsform der Erfindung ist der Schaft des Passstiftes länger als die gemeinsame Dicke der flächig aneinander liegenden, zu verbindenden Teile im Bereich der miteinander fluchtenden Bohrungen, also ggf. im Bereich einer dortigen Vertiefung, bspw. zur Aufnahme des verbreiterten Kopfs des Passstiftes. In diesem Falle ragt das Schaftende des Passstiftes jenseits des dem Kopfende des Passstiftes gegenüber liegenden Teiles aus der dortigen Bohrung heraus und kann in diesem überstehenden Bereich von einem Konterelement umgriffen werden.

Falls in dem vom Kopfende des Passstiftes übergriffenen Teil keine einsenkung vorhanden ist, oder falls die gemeinsame Tiefe sämtlicher ggf. vorhandener Einsenkungen kleiner ist als die Länge des überstehenden Bereichs des Schaftendes, so ist der Passstift insgesamt länger als die gemeinsame Dicke der flächig aneinander liegenden, zu verbindenden Teile, außerhalb ggf. vorhandener Einsnkungen.

Generell, insbesondere aber bei der zuletzt beschriebenen Ausführungsform der Erfindung, kann der Gewindebereich als Außengewinde ausgebildet und außen an dem Schaft im Bereich eines dem Kopfende des Passstiftes gegenüber liegenden Stirnendes angeordnet sein. Auf diesen, bei vollständig durch die zu verbindenden Teile hindurch gestecktem Passstift nach außen ragenden Schaftbereich kann sodann eine Mutter oder ein sonstiges Gewindeelement mit Innengewinde aufgeschraubt werden, welches schließlich mit seiner Stirnseite an dem umgebenden Oberflächenbereich des betreffenden Teils anliegt und dadurch die zu verbindenden Teile fest aneinanderpreßt.

Im Rahmen einer Druckvorrichtung, insbesondere eines Portaldruckers, mit wenigstens einem entlang einer Führungseinrichtung verfahrbaren Schlitten und mit wenigstens einem Druckkopf, wobei ein plattenförmiger Bereich des Druckkopfs sowie eine vorzugsweise plattenförmige Befestigungseinrichtung an dem Schlitten wenigstens je eine miteinander fluchtende Bohrung aufweisen, ist erfindungsgemäß vorgesehen, dass in die miteinander fluchtenden Bohrungen ein Passstift hineingesteckt ist, umfassend einen zylindrischen Schaftbereich von konstantem Schaftdurchmesser aus einem harten Material, insbesondere aus gehärtetem Stahl, sowie ein Kopfende mit einem gegenüber dem Schaftdurchmesser vergrößerten Durchmesser, und einen Gewindebereich mit einem gegenüber dem Schaftdurchmesser verringerten Durchmesser.

Gerade bei derartigen, höchst präzise auszurichtenden sowie unter beengten Platzverhältnissen fest miteinander zu verbindenden Teilen können sich die erfindungsemäßen Passstifte bewähren. Hier genügen bereits zwei derartige Passstifte an beiden Enden der die Düsen aufweisenden Platte eines einzelnen Druckkopfs, um jenen an einem Schlitten der betreffenden Druckvorrichtung präzise sowie dauerhaft und unverrückbar festzulegen.

Zu diesem Zweck kann ferner vorgesehen sein, dass ein plattenförmiger Bereich des Druckkopfs oder eine plattenförmige Befestigungseinrichtung an dem Schlitten der eine Einsenkung zur Aufnahme des verdickte Kopfendes des Passstiftes aufweist. Damit kann ein Überstand des Passstiftes über die mit den Düsenmündungen versehene Ebene des Druckkopfs vermieden werden, und dadurch läßt sich der Druckkopf ggf. vollständig bis an die zu bedruckende Fläche heranschieben. Dort ist bspw. bei einem Tintenstrahldrucker der Tintenstrahl noch nicht aufgefächert, mithin die Druckgenauigkeit am höchsten.

Schließlich umfaßt die Erfindung ein in/auf den Gewindebereich geschraubtes Gewindeelement mit einem gegenüber dem Schaftdurchmesser verdickten maximalen Außendurchmesser und mit einer Anlagefläche, welche im Bereich des dem Kopfende des Passstiftes gegenüber liegenden Stirnendes an dem dortigen Teil anliegt und damit den Druckkopf und dem Schlitten aneinanderpresst. Diesem Gewindeelement obliegt es, beim Zusammenschrauben der beiden mit dem erfindungsgemäßen Passstift als Konterelement zu dessen Kopfende einen Gegendruck auf die zu verbindenden Teile auszuüben und diese dadurch aneinander unverrückbar zu fixieren.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine Unteransicht auf den Druckkopf einer Druckvorrichtung;
- Fig. 2: einen Schnitt durch die Fig. 1 entlang der Linie II - II;
- Fig. 3: einen Längsschnitt durch den Passstift aus Fig. 2;
- Fig. 4: eine Ansicht auf die Fig. 3 in Richtung des Pfeils IV; sowie
- Fig. 5: eine andere Ausführungsform der Erfindung in einer der Fig. 2 entsprechenden Darstellung.

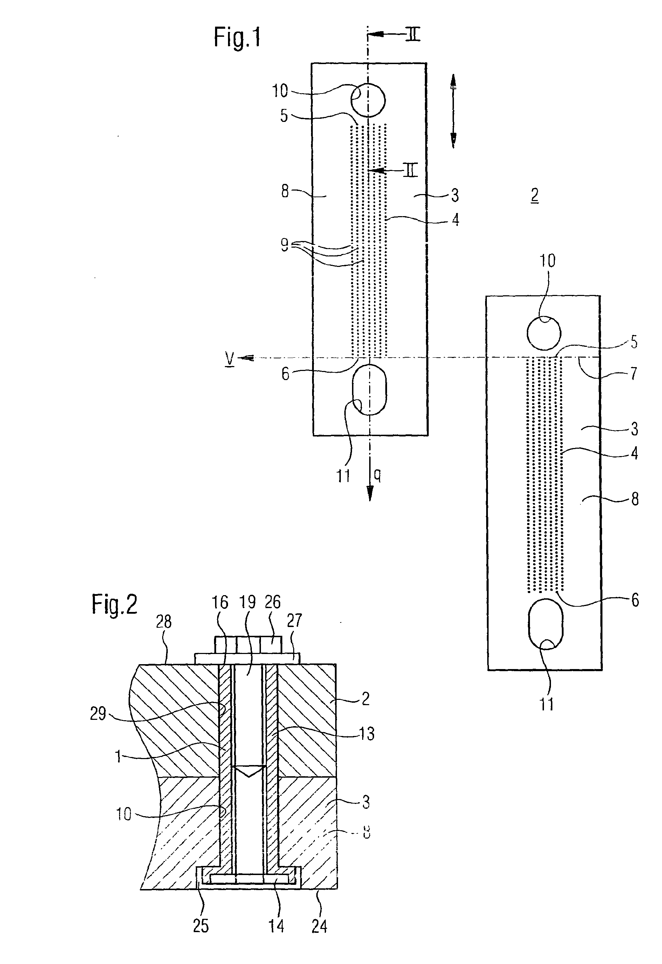

In Fig. 1 ist ein bevorzugter Anwendungsfall für einen erfindungsemäßen Passstift 1 dargestellt. Die Zeichenebene soll dabei die Unterseite des Schlittens einer Druckvorrichtung 2 wiedergeben.

Wie im dargestellten Beispiel, so werden auch in der Praxis die Schlitten moderner Druckvorrichtungen 2 mit immer mehr Druckköpfen 3 bestückt. Dies hat den Vorteil, dass bei einem Weg des Schlittens entlang seiner Führungseinrichtung von jedem Druckkopf 3 ein Streifen mit einer der Länge seines Düsenbereichs 4 entsprechenden Breite bedruckt werden kann, insgesamt also ein Streifen mit einer Gesamtbreite entsprechend der Länge eines Düsenbereichs 4 mal der Gesamtzahl der verwendeten Druckköpfe 3. Eine größere Zahl von Druckköpfen 3 bringt jedoch das Erfordernis mit sich, dieselben exakt zueinander ausrichten zu müssen. Insbesondere in der Transportrichtung **v** des Schlittens muß das Ende 5 eines Düsenbereichs 4 exakt mit dem zugewandten Ende 6 des Düsenbereichs 4 eines benachbarten Druckkopfs 3 fluchten, wie in Fig. 1 durch die von der Transportrichtung **v** vorgegebene Fluchtlinie 7 angedeutet.

Zu diesem Zweck verfügt die Befestigungsplatte 8 jedes Druckkopfs 3, worin dessen Düsenöffnungen 9 münden, in der Praxis über zwei Befestigungslöcher 10, 11, welche von Befestigungsschrauben durchgriffen werden, um den Druckkopf 3 damit an Schraublöchern des Schlittens der Druckvorrichtung 2 zu befestigen. Um eine Justage zu ermöglichen, werden dabei Schrauben verwendet, die einen kleineren Durchmesser haben als die Befestigungslöcher 10, 11 in der Befestigungsplatte 8 und/oder als die Schraublöcher in dem Schlitten der Druckvorrichtung 2. Nun muß für eine komplette Justierung in einer Vielzahl von Einstellungen und Testläufen für jeden Druckkopf 3 die Flucht seiner beiden Enden 5, 6 mit den Enden 5, 6 der beiden benachbarten Druckköpfe 3 jeweils entlang einer gemeinsamen Fluchtlinie 7 parallel zur Transportrichtung **v** des Schlittens hergestellt werden. Dies erfolgt iterativ, d.h. durch vielmalige Widerholung der Sequenz "Einstellung" - "Testlauf". Diese Vorgehensweise hat sich in der Praxis als äußerst zeitintensiv erwiesen, währenddem die Druckvorrichtung 2 praktisch stillsteht, also für den Produktionsablauf inaktiv ist. Dieser in höchstem Maße unwirtschaftliche Zustand gab Veranlassung zur Entwicklung des erfindungsgemäßen Passstiftes 1.

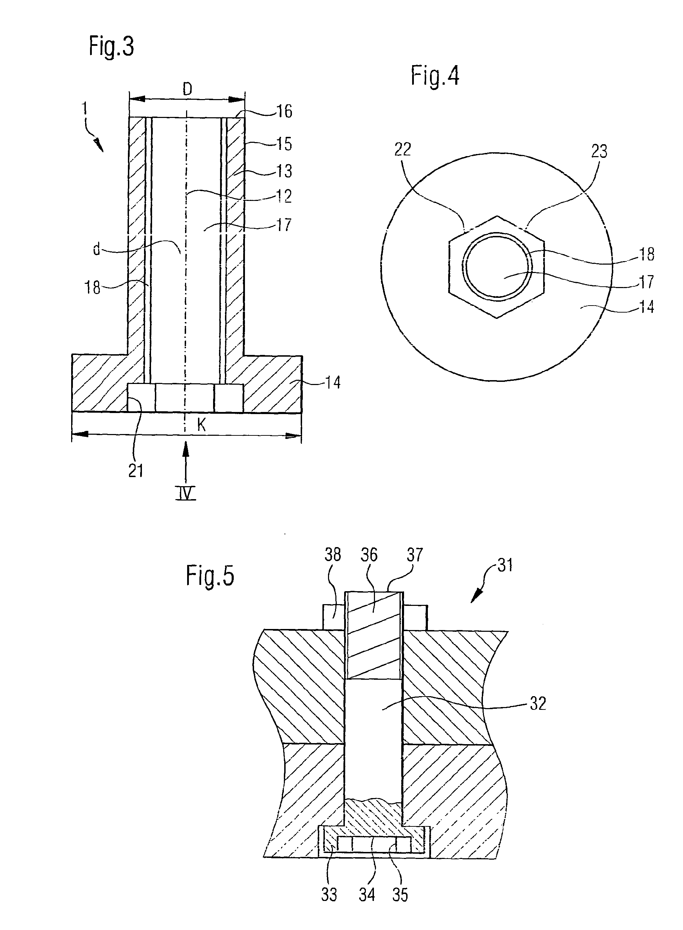

Eine erste Ausführungsform desselben ist in Fig. 3 in einem Längsschnitt wiedergegeben. Dieser Schnitt verläuft entlang der Symmetrieachse 12 seiner rotationssymmetrischen Gestalt. An seiner äußeren Form kann man zwei Bereiche unterscheiden: Einen längeren Schaftbereich 13 und ein demgegenüber kürzeres Kopfende 14. Üblicherweise kann der Schaftbereich 13 bspw. zwischen fünf und zehn mal so lang sein wie das kürzere Kopfende 14. Der Schaftbereich 13 hat einen verjüngten Querschnitt im Verhältnis zu dem querschnittlich verbreiterten Kopfende 14. Beispielsweise hat das Kopfende 14 einen Außendurchmesser K, welcher gegenüber dem Außendurchmesser D des Schaftbereichs 13 um wenigstens 10 % vergrößert ist: K ≥ 1,1 * D, oder um 20 % vergrößert: K ≥ 1,2 * D, oder um 50 % vergrößert: K ≥ 1,5 * D.

Der Passstft 1 ist insgesamt aus einem einzigen, homogenen sowie relativ harten Material hergestellt wie bspw. gehärteter Stahl. Der Außenmantel 15 des Schaftes 13 ist auf wenigstens 1/100 mm genau gearbeitet und kann bspw. poliert sein.

Der Passstift ist in Fig. 3 bspw. in einem Maßstab zwischen 1 : 5 und 1 : 15 vergrößert wiedergegeben. Je nach Anwendungsfall - d.h. nach der Gesamtdicke der zu verbindenden Teile 2, 3 beträgt seine Gesamtlänge nur etwa zwischen 5 mm und 15 mm.

Die Ausführungform gemäß Fig. 3 eignet sich besonders für Passstifte 1 mit einem Außendurchmesser D im Schaftbereich 13 von 3 mm oder mehr: D ≥ 3 mm. In diesem Fall ist es ohne Beeinträchtigung der Strukturstabilität möglich, eine koaxial zu der Symmetriachse 12 vom Kopfende 14 bis zum Schaftende 16 durchgehende Bohrung 17 mit einem minimalen Innendurchmesser d vorzusehen. Die verbleibende Wandstärke w, also die Hälfte aus der Differenz zwischen Außendurchmesser und Innendurchmesser: w = ½ * (D - d), sollte aus Stabilitätsgründen wenigstens noch 0,5 mm betragen.

Die Bohrung 17 ist zumindest bereichsweise, jedenfalls im Bereich des Schaftendes 16, mit einem Innengewinde 18 versehen, worin von dem Schaftende 16 her eine Schraube 19 eingeschraubt werden kann.

Im Bereich des Kopfendes 14 weist die Bohrung 17 eine Erweiterung 20 in radialer Richtung auf; der Rand 21 dieser Erweiterung 20 dient zum drehschlüssigen Eingriff eines Schraubwerkeugs, bspw. eines Imbusschlüssels, und weist eine entsprechende, bspw. prismatische, mehreckige Gestalt auf, insbesondere einen Innensechskant 22 mit sechs jeweils unter einem Winkel von 120° aufeinander treffenden Begrenzungsflächen 23. Damit kann während der Montage der Passstift 1 mittels eines Imbusschlüssels festgehalten werden, wenn von dessen Schaftende 16 eine Schraube 19 eingeschraubt und festgezogen wird.

Wie man Fig. 2 entnehmen kann, haben die Befestigungbohrungen 10, 11 an ihrem dem Schlitten der Druckvorrichtung 2 abgewandten Fläche 24 jeweils eine Erweiterung 25 zur Aufnahme des Kopfendes 14 eines Passstiftes 1, so dass dieses Kopfende 14 vorzugsweise komplett versenkt werden kann und dementsprechend den minimalen Abstand zwischen der die Düsenöffnungen 9 aufweisenden Ebene 24 und der zu bedruckenden Fläche weder begrenzt noch beeinträchtigt. Der Innendurchmesser dieser Erweiterung 25 sollte etwas größer sein als der Kopfdurchmesser K des Passstiftes 1, und die Tiefe der Erweiterung 25 sollte gleich oder etwas größer sein als die zur Symmetrieachse 12 parallele Längserstreckung des Kpopfendes 14.

Die Länge des Schaftbereichs 13 sollte höchstens gleich oder eher etwas kürzer sein als die Gesamtdicke der aneinander zu schraubenden Teile 2, 3 abzüglich der Tiefe der Erweiterung 25, so dass das Schaftende 16 jedenfalls nicht aus dem betreffenden Teil des Schlittens der Druckvorrichtung 2 herausragt. Wenn demzufolge die Schraube 19 eingeschraubt wird, sitzt weder deren Kopf 26 noch eine ggf. eingefügte Unterlegscheibe 27 auf dem Schaftende 16 des Passstiftes 1 auf, sondern ausschließlich auf der übergriffenen Fläche 28 des Teils der Druckvorrichtung 2. Aus diesem Grund kann die Schraubverbindung 1, 19 fest angezogen werden, um die Teile 2, 3 mit einer ausreichenden Nomralkraft und damit reibschlüssig aneinanderzupressen, wodurch der Formschluß zwischen Passstift 1 und den Befestigungslöchern 10, 11 bzw. den Schraublöchern 29 entlastet wird.

Dieser Formschluß resultiert aus dem Umstand, dass zumindest je eine Querabmessung eines Befestigungslochs 10, 11 und eines Schraublochs 29 nach Art einer Passung, insbesondere einer Übergangspassung, mit dem Außendurchmesser D des Schaftbereichs 13 des Passstiftes 1 übereinstimmt, bspw. bis auf eine Größenordnung von 1/100 mm genau. Demzufolge liegt der maximale Versatz zwischen den Teilen 2, 3 ebenfalls in dieser Größenordnung, und Druckfehler in derartig kleinen Dimensionen lassen sich mit bloßem Auge nicht mehr erkennen, so dass eine Nachjustierung der Druckvorrichtung komplett entfallen kann, wenn die Löcher 10, 11, 29 mit einer hineichenden Genauigkeit an den Teilen 2, 3 platziert sind.

In Fig. 1 erkennt man ferner, dass nur eines der beiden Befestigungslöcher 10 einer Befestigungsplatte 8 einen kreisförmigen Umfang aufweist, während das jeweils andere Befestigungsloch 11 als Langloch ausgebildet ist, dessen Längsachse parallel zu der quer zur Vorschubrichtung **v** gerichteten Achse q des Druckbereichs 4 und also in Richtung zu dem jeweils anderen Befestigungsloch 10 ausgerichtet ist. Damit wird eine Überbestimmung im Bereich der Befestigung vermieden; die Position quer zur Vorschubrichtung **v** wird einzig durch das kreisförmige Befestigungsloch 10 vorgegeben, ebenso wie die Position in der Vorschubrichtung **v.** Nur die noch mögliche Dreh-Ausrichtung der Befestigungsplatte 8 um dieses Befestigungsloch 10 wird durch das Langloch 11 bestimmt. Die dortige Einsenkung 25 kann wie eine an dessen Rand rundum entlang laufende Auskehlung ausgebildet sein und dadurch wie auch das Langloch selbst eine längliche Gestalt erhalten.

In Fig. 5 ist eine abgewandelte Ausführungsform des erfindungsgemäßen Paßstiftes 31 während dessen Einsatzes wiedergegeben. Anhand eines Vergleichs mit der Fig. 2 erkennt man, dass dieser Passstift 31 eine ähnliche Grundform hat wie der Passtift 1, jedoch auch deutliche Unterschiede aufweist:
Ähnlich wie der Passstift 1, so verfügt auch der Passstift 31 über einen zylindrischen Schaftbereich 32 und ein demgegenüber querschnittlich verbreitertes Kopfende 33. Das Material sowie die Oberflächengenauigkeit und -bearbeitung, insbesondere im Schaftbereich 32, sind identisch mit der zuvor beschriebenen Ausführungsform.

Ein Haupt-Unterschied zu dem vorher beschriebenen Passstift 1 ist, dass bei dem Passstift 31 der Außendurchmesser D im Schaftbereich 32 auch kleiner sein kann als 3 mm. Dies rührt daher, dass der Passstift 31 im Bereich des Schaftes 32 keine koaxiale Bohrung aufweist, sondern massiv ist. Lediglich im Bereich des Kopfendes 33 ist eine Vertiefung 34 vorgesehen, zum Eingriff eines Drehwerkzeuges. Wie bei dem Passstift 1, so ist auch hier der Rand 35 der kopfseitigen Vertiefung 34 prismatisch gestaltet, bspw. nach Art eines Sechskants. Die Tiefe dieser Vertiefung 34 ist jedoch kleiner als die Dicke des Kopfendes 33, um den Schaftbereich 32 an keiner Stelle zu schwächen.

Anstelle eines Innengewindes 18 wie bei dem Passstift 1 ist bei dem Passstift 31 ein Außengewinde 36 vorgesehen, und zwar im Bereich seines Schaftendes 37. Dieses Außengewinde 36 erstreckt sich nicht über die gesamte Länge des Schaftes 32, sondern über weniger als die Hälfte von dessen Länge. Da dieses Außengewinde 36 nachträglich in den Schaftbereich 32 von konstantem Durchmesser D eingearbeitet, insbesondere eingeschnitten ist und also auch im Bereich seiner wendelförmig rundum laufenden Erhebungen nicht über den Durchmesser D des Schaftes 32 übersteht, kann der Passstift 31 ohne Probleme durch passgenaue Löcher 10, 11, 29 in den zu verbindenden Teilen 2, 3 hindurchgesteckt werden.

In diesem Fall wird jedoch zur Fixierung nicht eine Schraube 19 benötigt, sondern eine Mutter 38 oder ein sonstiges Gewindeelement mit Innengewinde, welche(s) auf das Außengewinde 36 aufschraubbar ist, ggf. auch unter Einfügung einer Unterlegscheibe.

Die letztere Ausführungsform eines erfindungsgemäßen Passstiftes 31 unterscheidet sich von der zuerst beschriebenen weiter noch dadurch, dass die Gesamtlänge des Passstiftes 31 größer ist als die Gesamtdicke der zu verbindenden Teile 2, 3. Jedenfalls muß die Länge seines Schaftes 32 größer sein als die Gesamtdicke der aneinander zu fügenden Teile 2, 3 abzüglich ggf. vorhandener Einsenkungen im Bereich der miteinander fluchtenden Bohrungen 10, 11, 29, damit der Gewindebereich 36 in ausreichendem Maße über die übergriffene Fläche 28 des Schlittens der Druckvorrichtung 2 herausragt und von der Mutter 38 umgriffen werden kann.

**Bezugszeichenliste**

| | | | |
|---|---|---|---|
| 1 | Passstift | 26 | Kopf |
| 2 | Druckvorrichtung | 27 | Unterlegscheibe |
| 3 | Druckkopf | 28 | Fläche |
| 4 | Düsenbereich | 29 | Schraubloch |
| 5 | Ende | 31 | Passstift |
| 6 | Ende | 32 | Schaftbereich |
| 7 | Fluchtlinie | 33 | Kopfende |
| 8 | Befestigungsplatte | 34 | Vertiefung |
| 9 | Düsenöffnung | 35 | Rand |
| 10 | Befestigungsloch | 36 | Außengewinde |
| 11 | Befestigungsloch | 37 | Schaftende |
| 12 | Symmetrieachse | 38 | Mutter |
| 13 | Schaftbereich | | |
| 14 | Kopfende | | |
| 15 | Außenmantel | | |
| 16 | Schaftende | | |
| 17 | Bohrung | | |
| 18 | Innengewinde | | |
| 19 | Schraube | | |
| 20 | Erweiterung | | |
| 21 | Rand | | |
| 22 | Innensechskant | | |
| 23 | Begrenzungsfläche | | |
| 24 | Ebene | | |
| 25 | Erweiterung | | |

## Patentansprüche

1. Passstift (1;31) aus einem einzigen, homogenen, harten Material, vorzugsweise aus gehärtetem Stahl, zur gegenseitigen Ausrichtung zweier zu verbindender, gelochter Teile, vorzugsweise einer Druckvorrichtung (2), insbesondere eines Portaldruckers, mit zwei einem zylindrischen Schaftbereich (13;32) von konstantem Schaftdurchmesser (D), dessen Außenmantel (15) nach Art einer Passung auf wenigstens 1/100 mm genau gearbeitet ist und von zwei mit einer entsprechenden Genauigkeit eingebrachten Bohrungen in den zu verbindenden Teilen nach Art einer Passung umgriffen wird, **gekennzeichnet durch**
a) ein Kopfende (14;33) mit einem gegenüber dem Schaftdurchmesser (D) vergrößerten Durchmesser (K), sowie
b) einen Gewindebereich (18;36) mit einem gegenüber dem Schaftdurchmesser (D) verringerten Durchmesser,
c) wobei die Länge des Schaftbereichs (13;32) derart bemessen ist, dass eine Stirnseite eines in oder an den Passstift (1;31) geschraubten Gewindeelements an dem umgebenden Oberflächenbereich des betreffenden Teils anliegt, nicht jedoch an dem Schaftende (16) des Passstiftes (1;32), und **dadurch** die zu verbindenden Teile fest aneinanderpresst.

2. Passstift (1:31) nach Anspruch 1, **dadurch gekennzeichnet, dass** das Kopfende (14;33) eine Einsenkung (25;34) aufweist.

3. Passstift (1;31) nach Anspruch 2, **dadurch gekennzeichnet, dass** die Einsenkung (25;34) in dem Kopfende (14;33) einen Innensechskant aufweist.

4. Passstift (1;31) nach einem der Ansprüche 1 bis 3, **dadurch gekennzeichnet, dass** der Schaft (13;32) eine koaxiale Bohrung (17) aufweist.

5. Passstift (1:31) nach Anspruch 4, **dadurch gekennzeichnet, dass** die Bohrung (17) den Passstift (1) zwischen dessen beiden Stirnenden (14,16) durchgehend durchsetzt.

6. Passstift (1;31) nach Anspruch 4 oder 5, **dadurch gekennzeichnet, dass** der Gewindebereich (18) als Innengewinde ausgebildet und innerhalb der Bohrung (17) angeordnet ist.

7. Passstift (1;31) nach einem der vorhergehenden Ansprüche, **dadurch gekennzeichnet, dass** der Passstift (1) gleich lang oder kürzer ist als die gemeinsame Dicke der flächig aneinander liegenden, zu verbindenden Teile (2,3).

8. Passstift (1;31) nach einem der Ansprüche 1 bis 6, **dadurch gekennzeichnet, dass** der Passstift (31) länger ist als die gemeinsame Dicke der flächig aneinander liegenden, zu verbindenden Teile (2,3).

9. Passstift (1;31) nach einem der vorhergehenden Ansprüche, **dadurch gekennzeichnet, dass** der Gewindebereich (36) als Außengewinde ausgebildet und an einem dem Kopfende (33) des Passstiftes (31) gegenüber liegenden Stirnende (37) angeordnet ist.

10. Druckvorrichtung (2), insbesondere Portaldrucker, mit wenigstens einem entlang einer Führungseinrichtung verfahrbaren Schlitten und mit wenigstens einem Druckkopf (3), wobei ein plattenförmiger Bereich (8) des Druckkopfs (3) sowie eine vorzugsweise plattenförmige Befestigungseinrichtung an dem Schlitten wenigstens je eine miteinander fluchtende Bohrung (10,11,29) aufweisen, worin ein Passstift (1;31) aus einem einzigen, homogenen, harten Material, vorzugsweise aus gehärtetem Stahl, insbesondere nach einem der vorhergehenden Ansprüche, hineingesteckt ist mit einem zylindrischen Schaftbereich (13;32) von konstantem Schaftdurchmesser (D), dessen Außenmantel (15) nach Art einer Passung auf wenigstens 1/100 mm genau gearbeitet ist und von zwei miteinander fluchtenden, mit einer entsprechenden Genauigkeit eingebrachten Bohrungen (10,11,29) in den zu verbindenden Teilen nach Art einer Passung umgriffen wird, **gekennzeichnet durch**
a) ein Kopfende (14;33) mit einem gegenüber dem Schaftdurchmesser (D) vergrößerten Durchmesser (K), sowie
b) einen Gewindebereich (18;36) mit einem gegenüber dem Schaftdurchmesser (D) verringerten Durchmesser,
c) wobei die Länge des Schaftbereichs (13;32) derart bemessen ist, dass eine Stirnseite eines in oder an den Passstift (1;31) geschraubten Gewindeelements an dem umgebenden Oberflächenbereich des betreffenden Teils anliegt, nicht jedoch an dem Schaftende (16) des Passstiftes (1;32), und **dadurch** die zu verbindenden Teile fest aneinanderpresst.

11. Druckvorrichtung (2) nach Anspruch 10, **dadurch gekennzeichnet, dass** ein plattenförmiger Bereich (8) des Druckkopfs (3) oder eine plattenförmige Befestigungseinrichtung an dem Schlitten eine Einsenkung (25;34) zur Aufnahme des verdickte Kopfendes (14;33) des Passstiftes (1;31) aufweist.

12. Druckvorrichtung (2) nach einem der Ansprüche 10 oder 11, **gekennzeichnet durch** ein in/auf den Gewindebereich (18;36) geschraubtes Gewindeelement (19;38) mit einem gegenüber dem Schaftdurchmesser (D) verdickten maximalen Außendurchmesser und mit einer Anlagefläche, welche im Bereich des dem Kopfende (14;33) des Passstiftes (1;31) gegenüber liegenden Stirnendes (16;37) an dem dortigen Teil anliegt und damit den Druckkopf (3) und den Schlitten aneinanderpresst.

## Claims

1. Dowel pin (1, 31) made of one single homogenous hard material, preferably made of hardened steel, for the mutual alignment of two perforated parts to be connected, preferably of a printing device (2), particularly of a portal printer, by means of two sleeves having a cylindrical shank area (13, 32) of constant shank diameter (D) where the lateral surface (15) of the same is machined to a precision in the style of a fit of at least 1/100 mm, and which are embraced by two boreholes in the style of a fit in the parts to be connected, **characterized by**
a) A head end (14, 33) having an enlarged diameter (K) compared to the shank diameter (D) as well as
b) A threaded section (18, 36) having a reduced diameter compared to the shank diameter (D),
c) Where the length of the shank area (13, 32) is dimensioned so that one face side of a threaded element screwed into or onto the dowel pin (1, 31) abuts against the surrounding surface area of the corresponding part, however does not contact the shank end of the dowel pin (1, 31). thereby pressing the parts to be connected tightly against each other.

2. Dowel pin (1, 31) according to claim 1, **characterized by** the fact that the head end (14, 33) exhibits a countersink (25, 34).

3. Dowel pin (1, 31) according to claim 2, **characterized by** the fact that the countersink (25, 34) in the head end (14, 33) exhibits a hexagon socket.

4. Dowel pin (1, 31) according one of the claims 1 through 3, **characterized by** the fact that the shank (13, 32) exhibits a coaxial borehole (17).

5. Dowel pin (1, 31) according to claim 4, **characterized by** the fact that the borehole (17) extends all the way through between both face sides (14, 16) of the dowel pin (1).

6. Dowel pin (1, 31) according to claim 4 or 5, **characterized by** the fact that the threaded section (18) is designed as internal thread and is located within the borehole (17).

7. Dowel pin (1, 31) according to one of the above claims, **characterized by** the fact that the dowel pin (1) is of the same length as or shorter than the combined thickness of the planar against each other abutting parts (2, 3) to be connected.

8. Dowel pin (1, 31) according one of the claims 1 through 6, **characterized by** the fact that the dowel pin (31) is longer than the combined thickness of the planar against each other abutting parts (2, 3) to be connected.

9. Dowel pin (1, 31) according to one of the above claims, **characterized by** the fact that the threaded section (36) is designed as external thread and is located at a facing end (37) on the side opposite to the head end (33) of the dowel pin (31).

10. Printing device (2), particularly of a portal printer, having at least one slide traversing along a guideway device and having at least one printhead (3), at which a plate-shaped section (8) of the printhead (3) and a preferably plate-shaped fastening device at the slide exhibit at least one each aligning borehole (10, 11, 29), into which a dowel pin (1, 31) made of one single homogenous hard material, preferably made of hardened steel, in particular according to one of the above claims, is stuck in, having a cylindrical shank area (13, 32) of constant shank diameter (D) where the lateral surface (15) of the same is machined to a precision in the style of a fit of at least 1/100 mm, and which are embraced by two boreholes in the style of a fit in the parts to be connected, **characterized by**
a) A head end (14, 33) having an enlarged diameter (K) compared to the shank diameter (D) as well as
b) A threaded section (18, 36) having a reduced diameter compared to the shank diameter (D),
c) Where the length of the shank area (13, 32) is dimensioned so that one face side of a threaded element screwed into or onto the dowel pin (1, 31) abuts against the surrounding surface area of the corresponding part, however does not contact the shank end of the dowel pin (1, 31). thereby pressing the parts to be connected tightly against each other.

11. Printing device (2) according to claim 10, **characterized by** the fact that a plate-shaped section (8) of the printhead (3) or a plate-shaped fastening device at the slide exhibits a countersink (25, 34) for incorporating the thicker head end (14, 33) of the dowel pin (1, 31).

12. Printing device (2) according to one of the claims 10 or 11, **characterized by** a threaded element (19, 38) screwed onto the threaded section (18, 36) having a maximum outer diameter thicker than the shank diameter (D) and having a contact area, which is abutting against the part there in the area of the face end (15, 37) located opposite to the head end (14, 33) of the dowel pin (1, 31) and therefore is pressing the printhead (3) and the slide against each other.

## Revendications

1. Goupille (1 ; 31) en un seul matériau homogène, dur, de préférence en acier trempé, pour l'alignement réciproque de deux pièces percées à relier, de préférence d'un dispositif d'impression (2), en particulier d'une imprimante à portique, avec une zone de tige cylindrique (13 ; 32) d'un diamètre de tige constant (D), dont l'enveloppe extérieure (15) est travaillée à la manière d'un ajustage d'une précision d'au moins 1/100 mm et enserrée dans les pièces à relier à la manière d'un ajustage par deux alésages réalisés avec une précision correspondante, **caractérisée en ce qu'**
a) une tête (14 ; 33) d'un diamètre (K) élargi par rapport au diamètre de tige (D) ainsi qu'
b) une zone filetée (18 ; 36) d'un diamètre réduit par rapport au diamètre de tige (D),
c) **en ce que** la longueur de la zone de tige (13 ; 32) est mesurée de façon à ce qu'une face frontale d'un élément fileté vissé dans ou sur la goupille (1 ; 31) est appliquée sur la zone superficielle environnante de la pièce en question, toutefois pas sur l'extrémité de tige (16) de la goupille (1 ; 32), et de ce fait presse fortement les pièces à relier les unes contre les autres.

2. Goupille (1 ; 31) selon la revendication 1, **caractérisée en ce que** la tête (14 ; 33) présente un enfoncement (25 ; 34).

3. Goupille (1 ; 31) selon la revendication 2, **caractérisée en ce que** l'enfoncement (25 ; 34) présente un six pans creux dans la tête (14 ; 33).

4. Goupille (1 ; 31) selon l'une des revendications 1 à 3, **caractérisée en ce que** la tige (13 ; 32) présente un alésage coaxial (17).

5. Goupille (1 ; 31) selon la revendication 4, **caractérisée en ce que** l'alésage (17) traverse en continu la goupille (1) entre ses deux extrémités frontales (14, 16).

6. Goupille (1 ; 31) selon la revendication 4 ou 5, **caractérisée en ce que** la zone filetée (18) est réalisée sous forme de filetage femelle et ménagée à l'intérieur de l'alésage (17).

7. Goupille (1 ; 31) selon l'une des revendications précédentes, **caractérisée en ce que** la goupille (1) est de la même longueur ou plus courte que l'épaisseur commune des pièces (2, 3) à relier, appliquées à plat les unes contre les autres.

8. Goupille (1 ; 31) selon l'une des revendications 1 à 6, **caractérisée en ce que** la goupille (31) est plus longue que l'épaisseur commune des pièces (2, 3) à relier, appliquées à plat les unes contre les autres.

9. Goupille (1 ; 31) selon l'une des revendications précédentes, **caractérisée en ce que** la zone filetée (36) est réalisée sous forme de filetage mâle et est ménagée sur une extrémité frontale (37) opposée à la tête (33) de la goupille (31).

10. Dispositif d'impression (2), en particulier une imprimante à portique, avec au moins un chariot déplaçable le long d'une unité de guidage et avec au moins une tête d'impression (3), en ce qu'une zone (8) en forme de plaque de la tête d'impression (3) ainsi qu'une unité de fixation de préférence en forme de plaque présentent sur le chariot au moins chacune un alésage (10, 11, 29) étant aligné l'un sur l'autre, où une goupille (1 ; 31) en un seul matériau homogène, dur, de préférence en acier trempé, en particulier selon l'une des revendications précédentes, est insérée avec une zone de tige (13 ; 32) cylindrique d'un diamètre de tige (D) constant, dont l'enveloppe extérieure (15) est travaillée à la manière d'un ajustage d'une précision d'au moins 1/100 mm et enserrée dans les pièces à relier à la manière d'un ajustage par deux alésages (10, 11, 29) étant alignés l'un sur l'autre, réalisés avec une précision correspondante, **caractérisé en ce qu'**
a) une tête (14 ; 33) d'un diamètre (K) élargi par rapport au diamètre de tige (D) ainsi qu'
b) une zone filetée (18 ; 36) d'un diamètre réduit par rapport au diamètre de tige (D),
c) **en ce que** la longueur de la zone de tige (13 ; 32) est mesurée de façon à ce qu'une face frontale d'un élément fileté vissé dans ou sur la goupille (1 ; 31) est appliquée sur la zone superficielle environnante de la pièce en question, toutefois pas sur l'extrémité de tige (16) de la goupille (1 ; 32), et de ce fait presse fortement les pièces à relier les unes contre les autres.

11. Dispositif d'impression (2) selon la revendication 10, **caractérisé en ce qu'**une zone en forme de plaque (8) de la tête d'impression (3) ou une unité de fixation en forme de plaque présente sur le chariot un enfoncement (25 ; 34) pour le logement de la tête (14 ; 33) épaissie de la goupille (1 ; 31).

12. Dispositif d'impression (2) selon l'une des revendications 10 ou 11, **caractérisé par** un élément fileté (19 ; 38) vissé dans/sur la zone filetée (18 ; 36) d'un diamètre extérieur maximal élargi par rapport au diamètre de tige (D) et avec une surface d'appui qui, dans la zone de l'extrémité frontale (16 ; 37) opposée à la tête (14 ; 33) de la goupille (1 ; 31), est appliquée sur cette pièce et de ce fait presse la tête d'impression (3) et le chariot l'un contre l'autre.
